# EUROPÄISCHE PATENTSCHRIFT

(11) **EP 2 655 905 B1**
(45) Veröffentlichungstag und Bekanntmachung des Hinweises auf die Patenterteilung: **01.07.2015**
(21) Anmeldenummer: 11808590.1
(22) Anmeldetag: 20.12.2011
(51) Int. Cl.: F16C 7/02, F16C 9/04, F16C 33/04, F16J 7/00, F02F 3/00

(54) **LAGERBUCHSE FÜR EINE PLEUELSTANGE, KOMBINATION AUS EINER PLEUELSTANGE UND EINER LAGERBUCHSE SOWIE VERFAHREN ZUR HERSTELLUNG DERSELBEN**
BEARING BUSH FOR A CONNECTING ROD, CONNECTING ROD WITH THE BEARING BUSH AND METHOD OF MANUFACTURING SAME
COUSSINET POUR UNE BIELLE, BIELLE AVEC LE COUSSINET ET PROCÉDÉ POUR SON FABRICATION

(30) Priorität: 22.12.2010 DE 102010055518
(43) Veröffentlichungstag der Anmeldung: 30.10.2013
(73) Patentinhaber: Volkswagen Aktiengesellschaft, 38440 Wolfsburg (DE)
(72) Erfinder: PAULS, Rudolf, 38446 Wolfsburg (DE)
(86) Internationale Anmeldenummer: PCT/EP2011/006431
(87) Internationale Veröffentlichungsnummer: WO 2012/084195

(56) Entgegenhaltungen:
- DE-A1- 3 614 532
- DE-A1- 19 828 847
- US-B1- 6 513 238
- US-B1- 7 240 584

## Beschreibung

Die Erfindung betrifft eine Lagerbuchse für eine Pleuelstange mit einem Pleuelkopf, der eine Lagerbohrung, insbesondere für die Aufnahme eines Bolzens eines Motorkolbens einer Brennkraftmaschine, aufweist, wobei ein erster Bereich der Lagerbohrung, der im Betrieb auf Druckkraft belastet ist, länger als ein zweiter, auf Zugkraft belasteter, Bereich der Lagerbohrung ist. Des Weiteren betrifft die Erfindung eine Kombination aus einer Pleuelstange und einer Lagerbuchse sowie ein Verfahren zur Herstellung derselben.

Pleuelstangen dienen zur Zünddruckkraftübertragung von Kolben auf die Kurbelwelle von Brennkraftmaschinen.

Aus der DE 101 29 559 C1 ist eine Pleuelstange mit einem Pleuelkopf bekannt. Die Ausführung des Pleuelkopfes zur Aufnahme des Kolbenbolzens ist so gestaltet, dass ein Kreisabschnitt des Pleuelkopfes eine Lagerbohrung aufweist, wobei die untere Hälfte der Lagerbohrung länger ist als die oberhalb ausgebildete weitere Hälfte der Lagerbohrung im oberen Kreisabschnitt des Pleuelkopfes. Hierdurch wird vorzugsweise im Hauptbelastungszustand des Kolbens eine optimale Lagergestaltung im Pleuelkopf erzielt. Zur Lagerung des Kolbenbolzens wird keine Lagerbuchse verwendet, sondern die Lagerbohrung mit Bleibronze ausgegossen. Eine Schmierung des Kolbenbolzens in der Lagerbohrung muss über entsprechende Bohrungen und Ausnehmungen in der Pleuelstange bzw. dem -kopf bewerkstelligt werden, was mit einem entsprechenden Fertigungsaufwand verbunden ist.

Aus dem Stand der Technik sind weiterhin Pleuelstangen bekannt, bei denen das kleine Pleuelauge trapezförmig ausgebildet ist. Die Seitenflächen des Pleuelauges verlaufen schräg zur Längsachse der Pleuelstange, so dass die in den Kolben weisende Lagerbreite geringer ist als die zum stangenförmigen Abschnitt der Pleuelstange gerichtete. Üblicherweise soll das Pleuelauge mit einer Gleitlagerbuchse versehen sein. Indem die Außenform des Auges elastisch verformbar ist und unter Last eine leicht ovalförmige Form annimmt, wird eine Schmiermittelaufnahme bereitgestellt. Es sind auch Trapezpleuel bekannt, bei denen die Seitenflächen des kleinen Pleuelauges auf der Breite des Kolbenbolzendurchmessers zylindrisch-einfach konkav gekrümmt sind (DE 37 33 982 A1). Es ist auch beschrieben, dass die Kanten der Lagerbohrung bzw. der Lagerbüchse des kleinen Pleuelauges gleichmäßig angefast werden.

In den Dokumenten US 7,516,546 B2 und US 7,581,315 B2 ist beschrieben, wie ein Pleuel mit in einem Auge des Pleuels aufgenommener Buchse hergestellt werden kann, indem ein Buchsenrohling im Auge des unbearbeiteten Pleuels aufgenommen wird und anschließend Pleuel und Buchsenrohling gemeinsam formgebend bearbeitet werden, so dass eine abgestufe Kontur der Seitenfläche des Auges mit daran angepasster Kontur der aufgenommen Buchse hergestellt wird. In analoger Weise wird im Dokument EP 1 803 946 A2 beschrieben, einen Verbund aus einer Pleuelstange und einem Buchsenrohling gemeinsam in einem einzigen Schritt formgebend zu bearbeiten.

Die DE 198 28 847 A1, DE 36 14 532 A1, US 7,240,584 B1 und die US 6,513,238 B1 zeigen jeweils eine Lagerbuchse für eine Pleuelstange mit einem Pleuelkopf, der eine Lagerbohrung aufweist, wobei ein erster Bereich der Lagerbohrung, der im Betrieb auf Druckkraft belastet ist, länger als ein zweiter, auf Zugkraft belasteter, Bereich der Lagerbohrung ist, wobei die mit der Pleuelstange unverbundene Lagerbuchse eine an die Endrandkontur der Lagerbohrung angepasste Form aufweist, wobei der erste Bereich der Lagerbuchse ebenfalls länger als ihr zweiter Bereich ausgebildet ist.

Ausgehend hiervon liegt der Erfindung die Aufgabe zugrunde, eine Lagerbuchse beziehungsweise eine Pleuelstange derart weiterzubilden bzw. ein Herstellverfahren vorzuschlagen, dass die Pleuelstange bei einfacher Herstellung und/oder Gewichtsoptimierung gute Lagereigenschaften für den Kolbenbolzen aufweist.

Diese Aufgabe wird zum einen durch eine Lagerbuchse mit den Merkmalen des Anspruchs 1, beziehungsweise durch eine Kombination aus einer Pleuelstange und einer Lagerbuchse mit den Merkmalen des Anspruchs 2 beziehungsweise durch ein Verfahren mit den Merkmalen des Anspruchs 7 gelöst. Vorteilhafte Ausführungsformen befinden sich in den abhängigen Ansprüchen.

Die Erfindung stellt eine Lagerbuchse für eine Pleuelstange mit einem Pleuelkopf, der eine Lagerbohrung, insbesondere für die Aufnahme eines Bolzens eines Motorkolbens einer Brennkraftmaschine, aufweist, bereit. Die mit der Pleuelstange unverbundene Lagerbuchse weist, insbesondere bereits vor ihrem Einsetzen in die Lagerbohrung und/oder vor Ihrem ersten Einsetzen in die Lagerbohrung, eine an die Endrandkontur der Lagerbohrung angepasste Form auf. Bevorzugt ist die erfindungsgemäße Lagerbuchse bereits endbearbeitet.

Der erste Bereich der Lagerbohrung, der im Betrieb auf Druckkraft belastet ist, ist vorzugsweise ein Teil von der oder die untere Hälfte einer kreisförmigen Bohrung (auch als kleines Auge bezeichnet). Der zweite Bereich, der auf Zugkraft belastet ist, ist vorzugsweise ein Teil von oder die obere Hälfte des Kreissegmentes. Der erste Bereich der Lagerbohrung ist länger als der zweite Bereich der Lagerbohrung ausgebildet, wobei sich der erste und auch der zweite Bereich quer zur Längsachse der Pleuelstange erstrecken. Erfindungsgemäß ist nun vorgesehen, dass in der/die Lagerbohrung eine Lagerbuchse angeordnet bzw. eingepresst ist, deren Form an die Endform des Randes der Lagerbohrung angepasst ist, d.h. der erste Bereich (untere (Teil-) Hälfte bzw. das untere Kreissegment) der mit der Pleuelstange unverbundenen Lagerbuchse ist ebenfalls länger ausgebildet als der zweite Bereich der Lagerbuchse (die obere (Teil-)Hälfte). Auf diese Weise muss die Lagerbuchse in der Lagerbohrung nicht durch das Einarbeiten eines Trapezes oder Fasen nachbearbeitet werden, so dass der Herstellprozess vereinfacht, bevorzugt optimiert ist. Die Lagerbuchse kann auch als Lagerschale bezeichnet werden.

Zwischen den beiden (erster und zweiter) Bereichen ist erfindungsgemäß kein stufiger Abschnitt vorgesehen, sondern die Bereiche gehen geschwungen ineinander über. Diese Formgebung wird auch als eine "Henkelkorbform" sowohl des Pleuelkopfes selbst als auch der Lagerbuchse bezeichnet. Diese Henkelkorbform zeigt einen vorteilhaften, bevorzugt optimalen Kompromiss zwischen Lagereigenschaften und Gewichtsersparnis.

Vorzugsweise weist der erste Bereich des Pleuelkopfes einen Anlaufbund auf bzw. ist entsprechend angefast. Die separate, eingepresste, Lagerbuchse ist so ausgebildet, dass sie mit dem Anlaufbund abschließt. Auf diese Weise werden trotz reduziertem Materialeinsatz optimale Lagereigenschaften erreicht.
Zwecks Gewichtsoptimierung ist die Pleuelstange bevorzugt strukturoptimiert ausgebildet. Hierzu weist der Pleuelschaft bevorzugt randseitige Rippen auf, die der Außenform des Schaftes folgen und zum Pleuelfuß hin - im Wesentlichen in konischer Form - auslaufen. Hierbei verlaufen die Rippen fast bis zur Trennfuge zwischen Pleuelschaft und Pleueldeckel: Ein weiteres Merkmal der Strukturoptimierung bei gleichzeitiger Gewichtseinsparung kann sein, dass die Innenfläche des Schaftes schmal ist und/oder stetig zu einem Anlaufbund des großen Auges verläuft.

Ferner kann zur Gewichtsreduzierung der Verbindungsbereich des Pleueldeckels (bzw. das Riemchen) schmal ausgebildet sein. Es liegt dann ein schlanker Lagerdeckel vor mit im Vergleich kürzeren Schrauben.

Eine gewichts- und/oder kostenoptimierte Pleuelstange wird nach der Erfindung dadurch hergestellt, dass in einem ersten Schritt ein Pleuelkopf mit einem ersten längeren und zweiten kürzeren Bereich mit noch geschlossener Lagerbohrung geformt wird, dass anschließend die Lagerbohrung eingebracht wird und dann eine an die Form der Lagerbohrung angepasste Lagerbuchse in die Bohrung eingepresst wird.

Nach einer bevorzugten Ausführungsform wird der Pleuelkopf bzw. dieser zusammen mit der Pleuelstange durch Schmieden hergestellt. Der Pleuelkopf weist dann schon eine charakteristische Form auf, die auch als "Henkelkorbform" bezeichnet wird. Während des Schmiedeprozesses wird auch schon ein abgerundeter Rand des Pleuelkopfes zur Lagerbohrung hin geformt. Es folgt das Erzeugen des Anlaufbundes der Lagerbohrung, bevorzugt durch Planfräsen. Anschließend wird die vorbereitete Lagerbohrung ausgebohrt. Danach wird die Lagerbuchse in ebenfalls "Henkelkorbform" in die Lagerbohrung bzw. das Kreissegment eingepresst. Diese Herstellungsabfolge hat den Vorteil, dass sowohl Pleuelkopf als auch die Lagerbuchse im Wesentlichen durch Vorprozesse ihre Endform erhalten, so dass der eigentliche Herstellprozess wesentlich schneller und/oder einfacher wird. Es entfallen die Bearbeitung des Pleuelkopfes als Trapez sowie anschließende Prozessschritte zum Anfasen des Anlaufbundes.

Eine vorteilhafte Ausführungsform der Erfindung wird anhand der Figuren näher beschrieben. Hierbei zeigen
- Fig. 1: die erfindungsgemäße Herstellungsabfolge des Pleuelkopfes nach der Erfindung;
- Fig. 2.: eine bevorzugte Ausführungsform einer Lagerbuchse mit erfindungsgemäßer Ausbildung und Anpassung an die Kontur der Lagerbohrung des Pleuelkopfes;
- Fig. 3: eine Ansicht einer bevorzugten Ausführungsform der erfindungsgemäßen Pleuelstange;
- Fig. 4: eine Teilansicht der Pleuelstange (Fig. 4a) gemäß Figur 3 sowie einen Querschnitt durch den Pleuelschaft (Fig. 4b) gemäß Figur 3.
- Fig. 5: eine schematische Übersichtsdarstellung zur Anordnung einer Pleuelstange in einer Brennkraftmaschine.

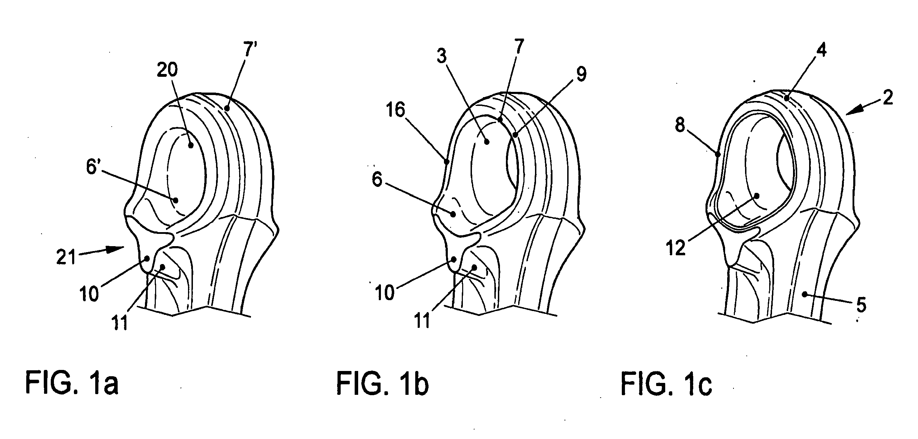

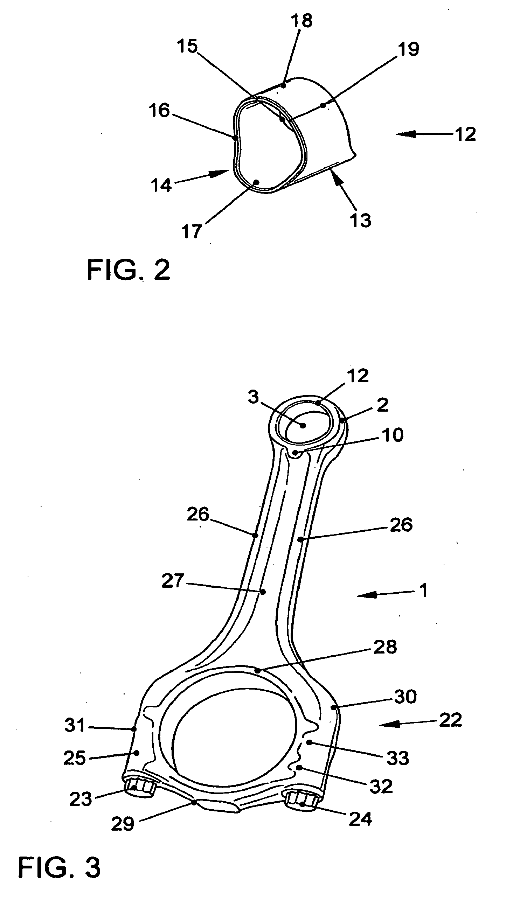

Fig. 1 zeigt in einer Abfolge drei Schritte (Fig. 1a-c) zur Herstellung der erfindungsgemäßen Pleuelstange (1; vgl. Fig. 3) mit einem Pleuelkopf (2).

Der Pleuelkopf 2 umfasst eine mittige Lagerbohrung 3 als kleines Auge und ist als Kreissegment 4 ausgebildet. Der Pleuelkopf 2 geht einstückig in den Pleuelschaft 5 über. Der erste, untere, Bereich 6'- hier ein Teil der unteren Hälfte, ist quer zur Schaftachse länger ausgebildet als ein zweiter, oberer, Bereich 7'- hier ein Teil der oberen Hälfte.

Im Gegensatz zu der Ausbildung des Pleuelkopfes aus der DE 101 29 559 C1 ist der Übergang 8 zwischen dem ersten Bereich 6' bzw. der unteren Schale zu dem oberen Bereich 7' bzw. der oberen Schale nicht stufig ausgebildet, sondern verläuft fließend. Auf diese Weise ist die untere - länger ausgebildete - Schale mit der oberen - kürzer ausgebildeten Schale in Form einer Krümmung miteinander verbunden. Insgesamt ergibt sich damit ein Pleuelkopf 2 in Form eines "Henkelkorbes". Entsprechendes gilt für die Kontur der Lagerbohrung.

Der untere Bereich 6' läuft in einen Anlaufbund 10, der in etwa die Form eines Dreiecks aufgrund einer Verstärkungsrippe 11 zum Pleuelschaft 5 hin aufweist. Aufgrund der optimierten Form kann die Wandstärke des Pleuelkopfs 2 im Verhältnis zu bekannten Pleuelstangen geringer dimensioniert werden. Nach dem Einbohren der Lagerbohrung 3 ist die Endrandkontur 9 der Lagerbohrung 3 festgelegt. Die äußeren Kanten des Pleuelkopfes zur Lagerbohrung sind gerundet ausgebildet.

Die separate Lagerbuchse 12 ist in die Lagerbohrung 3 eingepresst. Wesentlich ist, dass die Lagerbuchse 12 bereits im mit der Pleuelstange 1 unverbundenen Zustand, insbesondere vor einer ersten Verbindung mit der Pleuelstange 1, und/oder vor dem Einpressvorgang eine Form aufweist, die der späteren Endform bzw. den Randverläufen der Lagerbohrung entspricht.

Die Lagerbuchse 12 oder-hülse ist detailliert in Fig. 2 dargestellt. Sie geht von einem zylindrischen Grundkörper 13 aus, der an seinen Stirnseiten 14, 15 keine gerade geschnittene Kante aufweist, sondern einen gekrümmten bzw. geschwungenen Kantenverlauf 16. Hierbei ist der erste, untere, Bereich 17 der Buchse 12 länger als der zweite, obere, Bereich 18 ausgebildet. Die Randkontur verläuft geschwungen vom längeren Bereich 17 in den kürzeren Bereich 18. Damit weist die Lagerbuchse 12 vor ihrem Einpressen ebenfalls eine "Henkelkorbform" auf. Sie weist eine Naht 19 auf, die sich parallel zu ihrer Längsachse im Buchsenmantel erstreckt. Diese Naht 19 ist Stoß auf Stoß gefertigt.

Nachfolgend wird auf das Herstellverfahren des Pleuelkopfes 2 (Fig. 1) eingegangen. Der obere und untere Bereich 6', 7' des Pleuelkopfes 2 sind bereits an seine spätere Endkontur angepasst und werden durch Schmieden hergestellt. Die Lagerbohrung 3 ist durch eine Vertiefung 20 (vgl. Fig. 1a) angedeutet und noch geschlossen. Der untere bzw. erste Bereich 6' ist vorspringend ausgeformt. Eine Verstärkungsrippe 11 erstreckt sich aus dem oberen Bereich des Pleuelschaftes 5. Dieser vorspringende Teil 21 wird zu einem Anlaufbund 10 plangefräst. In einem zweiten Schritt wird die Lageröffnung eingebohrt (Fig. 1 b). Es ergibt sich die Endrandkontur der Lagerbohrung 3, die ebenfalls einen ersten, längeren, Bereich 6 und zweiten, kürzeren, Bereich 7 aufweist. Anschließend wird die Lagerbuchse 12, eine "Henkelkorbbuchse", in die Lagerbohrung 3 eingepresst. Prozessschritte wie das Bearbeiten einer Trapezform mit anschließendem Fasen von Lagerbohrung und Lagerbuchse entfallen.

Eine Seitenansicht der gesamten Pleuelstange 1 zeigt Fig. 3. Die Pleuelstange 1 umfasst den Pleuelkopf 2 mit der Lagerbohrung 3 (kleines Auge), den Pleuelschaft 5 sowie den Pleuelfuß 22 (großes Auge), der teilweise durch einen separaten mit Schrauben 23, 24 befestigten Pleueldeckel 25 gebildet wird.

Zur Strukturoptimierung verlaufen am Rand des Pleuelschaftes 5 - beginnend mit dem unteren Teil des Pleuelkopfes 2 - Rippen 26. Diese Rippen 26 bilden einen erhöhten Randbereich des Schafts 5 und folgen der Schaft-Außenform. Es ergibt sich ein im Wesentlichen H-förmiger Querschnitt. Die Schaftinnenfläche 27 zwischen den Rippen 26 verläuft stetig bzw. gleichmäßig zu einem Anlaufbund 28 des großen Auges, welches im Betrieb den Kurbelwellenhubzapfen aufnimmt.

Die Rippen 26 verlaufen bis zum oberen Teil des Pleuelfußes 22. Sie enden in etwa dort, wo der Pleueldeckel 25 angeschraubt wird. Ein weiteres Merkmal der Struktur- und Gewichtsoptimierung ist die Ausbildung eines schmalen Verbindungsbereichs 29 - oder auch Riemchen genannt - des Pleueldeckels 25, der sich zwischen zwei Bereichen oder Schultern 30, 31 zur Aufnahme der Verbindungsmittel - hier der Schrauben 23, 24 - erstreckt. Die Schrauben 23,24 bzw. die Schultern 30, 31 sind im Verhältnis zu bekannten Pleueln relativ kurz ausgebildet. Innerhalb der Schultern sind Einbuchtungen 32, 33 als Produktionshilfe vorgesehen. Es sind bei dieser Ausführungsform zwei Einbuchtungen 32, 33 entlang des Anlaufbundes vorgesehen.

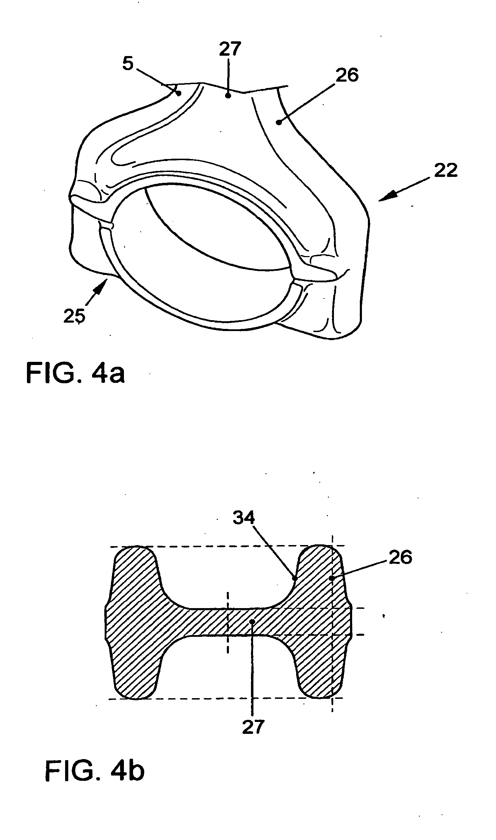

Eine weitere Ansicht auf den Pleuelfuß und dessen Strukturoptimierung zeigt Fig. 4. Es ist gut aus Fig. 4a ersichtlich, wie sich die Rippen 26 in den Pleuelfuß 22 erstrecken und oberhalb der Kante zwischen Schaft 5 und Deckel 25 enden. Fig. 4b zeigt den im Wesentlichen H-förmigen Querschnitt des Schaftes 5. Der Steg (oder die Schaftinnenfläche 27) des Schaftes 5 ist im Verhältnis zu dem von bekannten Pleuelstangen schmal ausgebildet. Der Übergang 34 zwischen Steg und Rippen 26 ist relativ steil bzw. stark gekrümmt ausgebildet. Auf diese Weise kann die oszillierende Masse des Pleuels wesentlich reduziert werden.

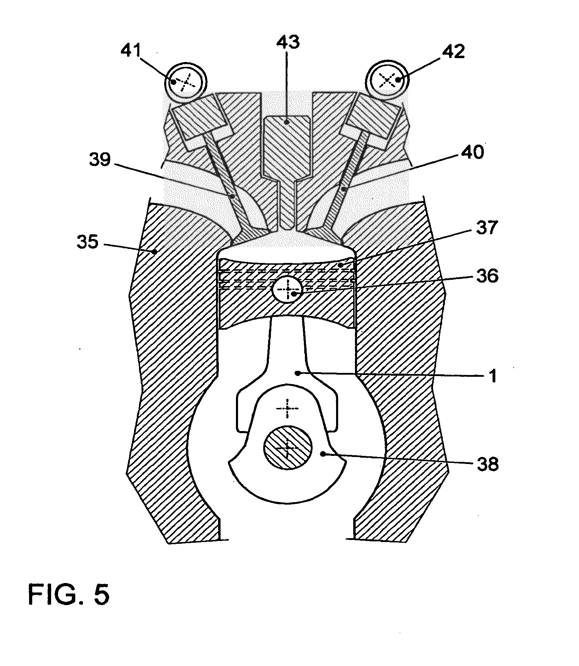

Mit Hilfe der Fig. 5 wird der bekannte Einsatz einer Pleuelstange 1 in einer Brennkraftmaschine, in einem Verbrennungsmotor (schematisch mit Gehäuse 35 gezeigt) dargestellt. Während das kleine Auge bzw. der Pleuelkopf 2 der Pleuelstange 1 den Bolzen 36 eines Motorkolbens 37 aufnimmt, ist das große Auge des Pleuels mit einem Hubzapfen der Kurbelwelle 38 verbunden. Schematisch sind weiterhin ein Einlass- und ein Auslassventil 39, 40 sowie Nocken 41, 42 der Nockenwellen sowie eine Einspritzdüse 43 dargestellt. Die erfindungsgemäße Kombination aus Pleuelstange und Lagerbuchse ist nicht auf den Einsatz eines solchen Motors beschränkt; dieser dient nur als illustrierendes Beispiel.

Erfindungsgemäß ist eine Kombination aus einer Pleuelstange 1 in "Henkelkorbform" sowie ebenso eine Lagerbuchse 12 in einer solchen Form vorgeschlagen. Der Pleuelkopf 2 wird vorzugsweise durch Schmieden ausgeformt. Auf diese Weise wird eine gewichtsoptimierte Pleuelstange mit aufgenommenener Lagerbuchse 12 bereitgestellt, die gute Betriebseigenschaften bei optimierter Herstellbarkeit aufweist.

### Bezugszeichenliste

- 1: Pleuelstange
- 2: Pleuelkopf
- 3: Lagerbohrung
- 4: Kreissegment
- 5: Pleuelschaft
- 6: erster Bereich der Lagerbohrung
- 7: zweiter Bereich der Lagerbohrung
- 6': erster Bereich des Pleuelkopfes
- 7': zweiter Bereich des Pleuelkopfes
- 8: Übergang
- 9: Endrandkontur
- 10: Anlaufbund
- 11: Verstärkungsrippe
- 12: .Lagerbuchse
- 13: Grundkörper der Lagerbuchse
- 14: Stirnseite der Lagerbuchse
- 15: Stirnseite der Lagerbuchse
- 16: geschwungener Kantenverlauf
- 17: erster - unterer - Bereich der Lagerbuchse
- 18: zweiter - oberer - Bereich der Lagerbuchse
- 19: Naht
- 20: Vertiefung
- 21: vorspringende Teil
- 22: Pleuelfuß
- 23: Schraube
- 24: Schraube
- 25: Pleueldeckel
- 26: Rippen
- 27: Schaftinnenfläche (Steg)
- 28: Anlaufbund des großen Auges
- 29: Verbindungsbereich
- 30: Schulter
- 31: Schulter
- 32: Einbuchtung
- 33: Einbuchtung
- 34: Übergang
- 35: Motorgehäuse
- 36: Bolzen
- 37: Motorkolben
- 38: Kurbelwelle
- 39: Einlassventil
- 40: Auslassventil
- 41: Nocken
- 42: Nocken
- 43: Einspritzdüse

## Patentansprüche

1. Lagerbuchse (12) mit einem ersten (17) und einem zweiten (18) Bereich für eine Pleuelstange (1) mit einem Pleuelkopf (2), der eine Lagerbohrung (3) aufweist, wobei ein erster Bereich (6) der Lagerbohrung (3), der im Betrieb auf Druckkraft belastet ist, länger als ein zweiter, auf Zugkraft belasteter, Bereich (7) der Lagerbohrung (3) ist, wobei die mit der Pleuelstange (1) unverbundene Lagerbuchse (12) eine an die Endrandkontur (9) der Lagerbohrung (3) angepasste Form aufweist, wobei der erste Bereich (17) der Lagerbuchse (12) ebenfalls länger als ihr zweiter Bereich (18) ausgebildet ist, **dadurch gekennzeichnet, dass** der erste Bereich (17) der Lagerbuchse (12) in den zweiten Bereich (18) über einen geschwungenen Verlauf (16) übergeht.

2. Kombination aus einer Pleuelstange (1) mit einem Pleuelkopf (2), der eine Lagerbohrung (3), insbesondere für die Aufnahme eines Bolzens (36) eines Motorkolbens (37) einer Brennkraftmaschine, aufweist, wobei ein erster Bereich (6) der Lagerbohrung (3), der im Betrieb auf Druckkraft belastet ist, länger als ein zweiter, auf Zugkraft belasteter, Bereich (7) der Lagerbohrung (3) ist, und einer in der Lagerbohrung (3) aufgenommenen Lagerbuchse (12), deren Form an die Endrandkontur (9) der Lagerbohrung (3) angepasst ist, wobei der erste Bereich (17) der Lagerbuchse (12) ebenfalls länger als ihr zweiter Bereich (18) ausgebildet ist, **dadurch gekennzeichnet, dass** die ersten Bereiche (6, 6', 17) sowohl des Pleuelkopfes (2), der Lagerbohrung (3) als auch der Lagerbuchse (12) in die jeweiligen zweiten Bereiche (7, 7', 18) über einen geschwungenen Verlauf (16) übergehen.

3. Kombination aus einer Pleuelstange (1) und einer Lagerbuchse (12) nach Anspruch 2 , **dadurch gekennzeichnet, dass** der Pleuelkopf (2) an seinem ersten Bereich (6') einen Anlaufbund (10) aufweist und die separat eingesetzte Lagerbuchse (12) mit dem Anlaufbund (10) abschließt.

4. Kombination aus einer Pleuelstange (1) und einer Lagerbuchse (12) nach einem oder mehreren der Ansprüche 2 bis 3, **dadurch gekennzeichnet, dass** ein an den Pleuelkopf (2) angeformter Pleuelschaft (5) randseitige Rippen (26) aufweist, die der Außenform des Schaftes (5) folgen und zum Pleuelfuß (22) auslaufen.

5. Kombination aus einer Pleuelstange (1) und einer Lagerbuchse (12) nach einem oder mehreren der Ansprüche 2 bis 4, **dadurch gekennzeichnet, dass** diese einen mit der Pleuelstange befestigten Pleueldeckel (25) mit Schultern (30, 31) zur Aufnahme von Verbindungsmitteln aufweist und der zwischen den Schultern (30, 31) verlaufende, vom Pleuelschaft (5) wegweisende, Verbindungsbereich (29) schmal ausgebildet ist.

6. Kombination aus einer Pleuelstange (1) und einer Lagerbuchse (12) nach Anspruch 5, **dadurch gekennzeichnet, dass** die Verbindungsmittel als Schrauben (23,24) ausgeführt sind.

7. Verfahren zur Herstellung einer Kombination aus einer Pleuelstange (1) mit einem Pleuelkopf (2) und einer Lagerbuchse (12), indem eine Lagerbohrung (3), in den Pleuelkopf (2) eingebohrt wird,
wobei ein erster Bereich (6) der Lagerbohrung (3), der im Betrieb auf Druckkraft belastet ist, länger als ein zweiter, auf Zugkraft belasteter, Bereich (7) der Lagerbohrung (3) ist, **dadurch gekennzeichnet, dass** eine Lagerbuchse (12) gemäß Anspruch 1, deren Form vor deren Einsetzen bereits an die Endrandkontur (9) der Lagerbohrung (3) angepasst ist, in die Lagerbohrung (3) eingesetzt wird.

8. Verfahren zur Herstellung einer Kombination aus einer Pleuelstange (1) mit einem Pleuelkopf (2) und einer Lagerbuchse (12) nach Anspruch 7, **dadurch gekennzeichnet,**
**dass** ein Pleuelkopf (2) mit einem ersten längeren und zweiten kürzeren Bereich (6', 7') mit noch geschlossener Lagerbohrung geformt wird,
**dass** die Lagerbohrung (3) eingebracht wird und
**dass** die Lagerbuchse (12) in diese eingepresst wird.

9. Verfahren zur Herstellung einer Kombination aus einer Pleuelstange (1) mit einem Pleuelkopf (2) und einer Lagerbuchse (12) nach Anspruch 7 oder 8, **dadurch gekennzeichnet, dass** der Pleuelkopf (2) geschmiedet wird.

10. Verfahren zur Herstellung einer Kombination aus einer Pleuelstange (1) mit einem Pleuelkopf (2) und einer Lagerbuchse (12) nach einem oder mehreren der Ansprüche 7 bis 9, **dadurch gekennzeichnet, dass**,
nachdem der Pleuelkopf (2) geformt worden ist, ein Anlaufbund (10) im ersten Bereich des Pleuelkopfes (6') eingebracht wird.

11. Verfahren zur Herstellung einer Kombination aus einer Pleuelstange (1) mit einem Pleuelkopf (2) und einer Lagerbuchse (12) nach Anspruch 10, **dadurch gekennzeichnet, dass** der Anlaufbund (10) durch Planfräsen eingebracht wird.

## Claims

1. Bearing bushing (12) having a first (17) and a second (18) region for a connecting rod (1) having a small end (2), which has a bearing bore (3), wherein a first region (6) of the bearing bore (3), which in operation is subjected to compressive loading, is longer than a second region (7) of the bearing bore (3), which is subjected to tensile loading, wherein the bearing bushing (12), when unconnected to the connecting rod (1), has a shape matched to the final edge contour (9) of the bearing bore (3), wherein the first region (17) of the bearing bushing (12) is likewise designed to be longer than the second region (18) thereof, **characterized in that** the first region (17) of the bearing bushing (12) merges into the second region (18) via a curvated profile (16).

2. Combination of a connecting rod (1) having a small end (2), which has a bearing bore (3), in particular for receiving a pin (36) of an engine piston (37) of a combustion engine, wherein a first region (6) of the bearing bore (3), which in operation is subjected to compressive loading, is longer than a second region (7) of the bearing bore (3), which is subjected to tensile loading, and of a bearing bushing (12) received in the bearing bore (3), the shape of which is matched to the final edge contour (9) of the bearing bore (3), wherein the first region (17) of the bearing bushing (12) is likewise designed to be longer than the second region (18) thereof, **characterized in that** the first regions (6, 6', 17) both of the small end (2), of the bearing bore (3) and of the bearing bushing (12) merge into the respective second regions (7, 7', 18) via a curvated profile (16).

3. Combination of a connecting rod (1) and of a bearing bushing (12) according to Claim 2, **characterized in that** the small end (2) has a stop collar (10) on the first region (6') thereof, and the separately inserted bearing bushing (12) ends with the stop collar (10).

4. Combination of a connecting rod (1) and of a bearing bushing (12) according to one or more of Claims 2 to 3, **characterized in that** a connecting rod shaft (5) formed integrally on the small end (2) has edge ribs (26) which follow the external shape of the shaft (5) and run out toward the big end (22).

5. Combination of a connecting rod (1) and of a bearing bushing (12) according to one or more of Claims 2 to 4, **characterized in that** said combination has a connecting rod bearing cover (25) secured to the connecting rod and having shoulders (30, 31) for receiving connecting means, and the connecting region (29) which extends between the shoulders (30, 31) and is remote from the connecting rod shaft (5) is of narrow design.

6. Combination of a connecting rod (1) and of a bearing bushing (1.2) according to Claim 5, **characterized in that** the connecting means are embodied. as screws (23, 24).

7. Method for producing a combination of a connecting rod (1) having a small end (2) and of a bearing bushing (12) by boring a bearing bore (3) into the small end (2),
wherein a first region (6) of the bearing bore (3), which in operation is subjected to compressive loading, is longer than a second region (7) of the bearing bore (3), which is subjected to tensile loading,
**characterized in that** a bearing bushing (12) according to Claim 1, the shape of which before insertion is already matched to the final edge contour (9) of the bearing bore (3), is inserted into the bearing bore (3).

8. Method for producing a combination of a connecting rod (1) having a small end (2) and of a bearing bushing (12) according to Claim 7, **characterized**
**in that** a small end (2) having a first, longer and a second, shorter region (6', 7') is formed with a bearing bore that is still closed,
**in that** the bearing bore (3) is introduced and
**in that** the bearing bushing (12) is pressed into said bore.

9. Method for producing a combination of a connecting rod (1) having a small end (2) and of a bearing bushing (12) according to Claim 7 or 8, **characterized in that** the small end (2) is forged.

10. Method for producing a combination of a connecting rod (1) having a small end (2) and of a bearing bushing (12) according to one or more of Claims 7 to 9, **characterized in that**
after the small end (2) has been shaped, a stop collar (10) is introduced in the first region of the small end (6').

11. Method for producing a combination of a connecting rod (1) having a small end (2) and of a bearing bushing (12) according to Claim 10, **characterized in that** the stop collar (10) is formed by plain milling.

## Revendications

1. Coussinet (12) comprenant une première (17) et une deuxième (18) zone pour une bielle (1) munie d'une tête de bielle (2), laquelle présente un alésage de palier (3), une première zone (6) de l'alésage de palier (3) qui est soumise à une contrainre de pression pendant le fonctionnement étant plus longue qu'une deuxième zone (7) de l'alésage de palier (3) soumise à une contrainte de traction, le coussinet (12) non relié. à la bielle (1) présentant une forme adaptée au profil de bord d'extrémité (9) de l'alésage de palier (3), la première zone (17) du coussinet (12) étant elle aussi réalisée plus longue que sa deuxième zone (18), **caractérisé en ce que** la première zone (17) du coussinet (12) effectue une transition vers la deuxième zone (18) par le biais d'un tracé incurvé (16).

2. Combinaison d'une bielle (1) munie d'une tête de bielle (2), laquelle présente un alésage de palier (3), notamment pour accueillir un axe (36) d'un piston de moteur (37) d'un moteur à combustion interne, une première zone (6) de l'alésage de palier (3) qui est soumise à une contrainte de pression pendant le fonctionnement étant plus longue qu'une deuxième zone (7) de l'alésage de palier (3) soumise à une contrainte dé traction, et d'un coussinet (12) accueilli dans l'alésage de palier (3), dont la forme est adaptée au profil de bord d'extrémité (9) de l'alésage de palier (3), la première zone (17) du coussinet (12) étant elle aussi réalisée plus longue que sa deuxième zone (18), **caractérisée en ce que** les premières zones (6, 6', 17) à la fois de la tête de bielle (2), de l'alésage de palier (3) et du coussinet (12) effectuent une transition vers les deuxièmes zones (7, 7', 18) respectives par le biais d'un tracé incurvé (16).

3. Combinaison d'une bielle (1) et d'un coussinet (12) selon la revendication 2, **caractérisée en ce que** la tête de bielle (2) présente au niveau de sa première zone (6') un collet de butée (10) et isole le coussinet (12) engagé séparément avec le collet de butée (10).

4. Combinaison d'une bielle (1) et d'un coussinet (12) selon une ou plusieurs des revendications 2 à 3, **caractérisée en ce qu'**une tige de bielle (5) façonnée sur la tête de bielle (2) présente des rainures (26) de bordure qui suivent la forme extérieure de la tige. (5) et se prolongeant vers le pied de bielle (22).

5. Combinaison d'une bielle (1) et d'un coussinet (12) selon une ou plusieurs des revendications 2 à 4, **caractérisé en ce que** celle-ci présente un chapeau de bielle (25) fixé à la tige de bielle et muni d'épaulements (30, 31) destinés à accueillir des moyens de liaison, et la zone de liaison (29) qui s'étend entre les épaulements (30, 31), en s'éloignant de la tige de bielle (5), est configurée étroite.

6. Combinaison d'une bielle (1) et d'un coussinet (12) selon la revendication 5, **caractérisée en ce que** les moyens de liaison sont réalisés sous la forme de vis (23, 24).

7. Procédé de fabrication d'une combinaison d'une bielle (1) munie d'une tête de bielle (2) et d'un coussinet (12) en perçant un alésage de palier (3) dans la tête de bielle (2), une première zone (6) de l'alésage de palier (3) qui est soumise à une contrainte de pression pendant le fonctionnement étant plus longue qu'une deuxième zone (7) de l'alésage de palier (3) soumise à une contrainte de traction, **caractérisé en ce qu'**un coussinet (12) selon la revendication 1, dont la forme est déjà adaptée au profil de bord d'extrémité (9) de l'alésage de palier (3) avant l'engagement, est engagé dans l'alésage de palier (3).

8. Procédé de fabrication d'une combinaison d'une bielle (1) munie d'une tête de bielle (2) et d'un coussinet (12) selon la revendication 7, **caractérisé en ce**
**qu'**une tête de bielle (2) munie d'une première zone (6') plus longue et d'une deuxième zone (7') plus courte est formée avec un alésage de pallier encore fermés
**que** l'alésage de palier (3) est rapporté et
**que** le coussinet (12) est enfoncé dans celui-ci.

9. Procédé de fabrication d'une combinaison d'une bielle (1) munie d'une tête de bielle (2) et d'un coussinet (12) selon la revendication 7 ou 8, **caractérisé en ce que** la tête de bielle (2) est forgée.

10. Procédé de fabrication d'une combinaison d'une bielle (1) munie d'une tête de bielle (2) et d'un coussinet (12) selon une ou plusieurs des revendications 7 à 9, caractérisé eh ce qu'après que la tête de bielle (2) a été formée, un collet de butée (10) est rapporté dans la première zone (6') de la tête de bielle,

11. Procédé de fabrication d'une combinaison d'une bielle (1) munie d'une tête de bielle (2) et d'un coussinet (12) selon la revendication 10, **caractérisé en ce que** le collet de butée (10) est rapporté par dressage à la fraise.
